(19) **Europäisches Patentamt / European Patent Office / Office européen des brevets**

(11) **EP 4 481 665 A1**

(12) **EUROPEAN PATENT APPLICATION**

(43) Date of publication:
**25.12.2024 Bulletin 2024/52**

(21) Application number: **24183865.5**

(22) Date of filing: **21.06.2024**

(51) International Patent Classification (IPC):
**G06Q 50/02** (2024.01)    **H04W 4/02** (2018.01)
**H04W 4/029** (2018.01)    **H04W 4/38** (2018.01)
**A01B 79/00** (2006.01)

(52) Cooperative Patent Classification (CPC):
**G06Q 50/02; A01B 79/005; G06F 3/011;**
**H04W 4/029;** G01G 19/56; G06N 20/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.06.2023 PT 2023118740**

(71) Applicants:
• **INESC TEC - Instituto de Engenharia de Sistemas e Computadores, Tecnologia e Ciência**
**4200-465 Porto (PT)**
• **Universidade Do Porto**
**4099-002 Porto (PT)**

(72) Inventors:
• **DIAS, Duarte Filipe**
**4430-037 VILA NOVA DE GAIA (PT)**
• **CARVALHO LEAL MENDES MOREIRA, João Pedro**
**4580-193 PAREDES (PT)**
• **MOURA DA COSTA, Nuno**
**4470-050 GUEIFÃES (PT)**
• **NETO GUEDES ARRAIS, Adriana Araújo**
**4200-465 Porto (PT)**
• **TRIGUEIROS DA SILVA CUNHA, João Paulo**
**4200-465 Porto (PT)**

(74) Representative: **Patentree**
**Edificio Net**
**Rua de Salazares, 842**
**4149-002 Porto (PT)**

(54) **METHOD FOR ESTIMATING AN AGRICULTURAL CROP STATUS FROM A WEARABLE SENSOR**

(57) The present document discloses a method for estimating an agricultural crop status from a wearable sensor worn by an agricultural worker, comprising the steps: collecting sensor data points from the wearable sensor worn by the agricultural worker when working on the agricultural crop, wherein each sensor data point is georeferenced; estimating an agricultural crop status for each sensor data point, using a pre-trained model which correlates sensor data with agricultural crop status; generating a 2D representation from the estimated agricultural crop status. It is also disclosed a wearable sensor to be worn by an agricultural worker for estimating an agricultural crop status and respective system.

Fig. 1

EP 4 481 665 A1

**Description**

**TECHNICAL FIELD**

The present disclosure relates to a method for estimating an agricultural crop status from a wearable sensor. In particular, multimodal signal processing to extract agricultural worker's data such as the number of shear cuts and/or body posture and/or location in order to infer a crop state.

**BACKGROUND**

The agroforestry sector reveals a significant dependence on the labour factor. In most cases, the problem arises from the need to ensure, on one hand, the efficiency of using this resource (optimization of its cost and time), and on the other hand, ensuring its safety and physical health. The lack of knowledge regarding the location and activities of each worker at any given moment, the operations they are performing and their repeatability, the weather conditions they are facing, and the type of movement and effort they need to exert - all these factors contribute to potential inefficiencies. When combined with high costs, they lead to low profitability and the deterioration of workers' well-being. This evidence, exacerbated by the absence of monitoring tools that enable control and optimization, requires special attention. It is essential to seek solutions that allow for effective monitoring of these factors, thereby enabling the efficient management of the available labour force in each agricultural operation. Hence, the need arises for the creation of a monitoring system to analyse metrics that support the management of available human resources, assisting in decision-making concerning both well-being and productivity.

The physically challenging nature of agriculture labour is associated with an extremely high prevalence of musculoskeletal disorders (MDS) in this sector workers. Research conducted in both developed and developing countries has demonstrated that agriculture workers exposure to poor ergonomic conditions, repetitive tasks, heavy loads, and exposure to vibrations constitute a significant risk for their physical health [1-5]. For example, vineyards workers have very repetitive manual work, namely cutting, and repetitive bending [12].

As in most industries, agriculture is going under a digitalization era to ensure its sustainability and be able to adapt to population growth, water scarcity and climate change, which threaten agricultural industry viability [6, 7]. This transformation in agriculture has been primarily focused on increasing productivity, sidelining the role of the worker [7, 8], who plays a crucial role performing specific tasks that require manual work [9].

In recent years, the use of wearables to monitor workers' occupational health has increased in various industries. Some of the existing solutions incorporating wearable devices include systems to monitor worker's incorrect postures with inertial and motion sensors, as well as systems to monitor vital signals and track the location of workers through GPS technology [10]. Systems for the specific monitoring of agriculture workers are practically inexistent. The focus of technology developments for agriculture application is mainly in the machination and automation of the tasks [6]. One of the few research papers [11] present an agro wearable solution dependent on systems placed on the field along the cultures, where RFID technology is used in combination with a worker pressure sensor to measure worker progress. These types of system are impractical in agriculture as it needs the placement of RFID tags on each tree.

Map-matching methods can be broadly classified into two main categories: online/local [16, 17, 18] and offline/global [19] for online/local methods. In an online setting, Map-matching focuses on matching the real-time position of a device as it moves along a local road network that changes dynamically with the device's trajectory. On the other hand, offline Map-matching involves storing positions over a period of time and subsequently performing matching on a pre-defined road network. On top of these categories, different models to deal with Map-matching problems were proposed over the years [20].

The first class of models is dubbed Similarity models. This type of model typically involves point-to-curve matching, where each GPS measurement is matched to a road using specific metric distance [21], or curve-to-curve matching, where GPS measurements are viewed as a curve and the most appropriate road match is set as the road which minimizes a certain distance function (e.g., the Fréchet distance) with respect to the GPS measurements [22] However, the inherent noise in GPS devices poses limitations to these methods. There might be situations where a road is on top of another, and a match based only on longitude and latitude may not be sufficient. As such, other parameters such as elevation, instant velocity, and road width started to be taken into account to further improve Map-matching models.

The second type of model is the State-Transition model, which assigns weights to roads based on the interaction between GPS measurements and the road network, for example, the Hidden Markov Model (HMM). Broadly speaking, an HMM is defined by two kinds of states -- the observed ones (the GPS measurements) and the hidden ones (the road network). The model is constructed and fully defined by a triplet of probabilities that depend on how the states interact with each other. When this triplet is unknown, it is modelled by a certain probability density function and their parameters are estimated via expectation-maximization (see, e.g. [23] for a review on different approaches of this type of model). In the context of Map-matching, these probabilities are typically modelled based on reasonable assumptions about the relationship between observable and hidden states, and the most probable sequence of hidden states is obtained using Viterbi decoding. Several contributions have been made to Map-matching under this type of model [16]. Additionally, Conditional Random Field (CRF) [24] and Weighted Graph Techniques (WGT) [19] are also explored within this category, although to a lesser extent than Hidden Markov Models.

In addition to these two types of models, there are Candidate-evolving models, which utilize approaches such as Particle Filters [25] and Scoring models [26]. In these models, the best road match for a given observation is determined by maximizing a scoring function over a group of potential road matches [27].

Finally, with the availability of labelled data, Deep Learning models have also been investigated in the field of Map-matching [28, 29]. These models leverage the power of deep learning techniques to learn complex patterns and relationships between GPS measurements and road networks. Transformers and other deep learning architectures have shown promising results in Map-matching tasks by capturing spatial dependencies and handling large-scale data.

Thus, Map-matching methods encompass various categories and models. Similarity models focus on point-to-curve or curve-to-curve matching, while State-Transition models, such as Hidden Markov Models, estimate probabilities to capture the interaction between GPS measurements and the road network. Candidate-evolving models use techniques like Particle Filters or Scoring models to select the best road match based on scoring functions. Additionally, the advent of Deep Learning models has introduced powerful approaches that exploit the capabilities of neural networks for Map-matching tasks.

In agriculture, operational purposes imply to know the state of the crops, such as, the areas of the vineyard less productive, the olives in a more advanced maturity state, etc. The use of wearable devices to enable such analysis and worker health monitoring is a huge lack on this industry sector. It can be used by the workers in their regular crop activities, without introduce any new machinery nor affect the normal activity, allowing to monitor both their well-being, and to answer operational questions as the state of the crop at a micro level.

These facts are disclosed in order to illustrate the technical problem addressed by the present disclosure.

## GENERAL DESCRIPTION

The present document discloses a method for estimating an agricultural crop status from a wearable sensor worn by an agricultural worker, comprising the steps: collecting sensor data points from the wearable sensor worn by the agricultural worker when working on the agricultural crop, wherein each sensor data point is georeferenced; estimating an agricultural crop status for each sensor data point, using a pre-trained model which correlates sensor data with agricultural crop status; generating a 2D representation i.e. a geographic map] from the estimated agricultural crop status, which is thus georeferenced by way of the georeference of the sensor data point collected when working on the agricultural crop.

It is also disclosed a system for estimating an agricultural crop status comprising a wearable sensor to be worn by an agricultural worker for estimating an agricultural crop status, and comprising a data processor arranged for carrying out any of the disclosed methods, in particular the wearable sensor being arranged on a band, a band preferably for placement on a portion of the upper arm, forearm, hand, wrist, chest, or combinations thereof. The system may comprise at least two wearable sensors to be worn by an agricultural worker for estimating an agricultural crop status, in particular wherein one of the wearable sensors is comprised in a smartphone.

The system may comprise a basket for measuring a quantity of crop placed inside of the basket, comprising: one or more weight sensors; an accelerometer configured to detect the orientation and tilt of the basket; and a processing unit connected to the weight sensors and the accelerometer; wherein the processing unit is configured for: receiving data from the weight sensors and from the accelerometer [indicating a tilt and orientation of the basket]; and providing a corrected weight by adjusting the weight measurement based on the accelerometer data [i.e., thus improving the weight measurement when the basket is used by the worker on tilted soils or uneven surfaces].

In the system, the one or more weight sensors may be one or more load cells comprised in a base of the basket or in a handle of the basket [this is particularly advantageous if the basket is hanged in areas with branches which tilt or rotate the basket, i.e., where the basket is not freely hanged].

The data processor may be arranged to use the accelerometer data used to determine if the basket is in motion and temporarily pause weight measurement while motion is detected [to avoid measurement inaccuracies].

In an embodiment, the sensor data point is georeferenced by map matching received georeferencing coordinates with a geographical distribution of the agricultural crop.

In an embodiment, the geographical distribution of the agricultural crop comprises a plurality of line segments, the map matching comprises minimizing a distance between a received georeferencing coordinate and projections from the plurality of line segments, in particular a Fréchet distance.

Alternatively, in an embodiment, the geographical distribution of the agricultural crop comprises a plurality of line segments, the map matching comprises in making a one-to-one correspondence between each georeferencing coordinate and a given topology. Particularly, for the olive culture the topology is the set of trees and its transitions, while for the vine culture the topology is, for example, a set of metallic structures, and the transitions between them.

In an embodiment, the geographical distribution of the agricultural crop comprises a plurality of points, the map matching comprises minimizing a distance between a received georeferencing coordinate and the plurality of points, in particular a Fréchet distance.

In an embodiment, the map matching comprises carrying out a Hidden-Markov Model where hidden states are possible locations of the geographical distribution of the agricultural crop.

In an embodiment, each sensor data point collected comprises at least one wearable sensor parameter, in particular comprising: a georeferenced position of the wearable sensor, velocity of the wearable sensor, an inertial position of the wearable sensor, e.g., accelerometer, gyroscope, magnetometer, or combinations thereof.

In an embodiment, each sensor data point collected comprises at least one worker manual operation parameter, in particular comprising: frequency of movement, number of movements, movement force, or combinations thereof, e.g., via the measurement of a mechanomyography signal.

In an embodiment, each sensor data point collected comprises at least one worker biosignal, in particular comprising: skin temperature, electrocardiogram signal, cardiac rhythm, respiration signal, e.g., using a monitoring wearable skin-patch, respiratory belt or an impedance pneumography, or combinations thereof.

It is also disclosed a wearable sensor to be worn by an agricultural worker for estimating an agricultural crop status, comprising a data processor arranged for carrying out the disclosed method. It is further disclosed a system for estimating an agricultural crop status, comprising at least two wearable sensors to be worn by an agricultural worker. It is also disclosed a system wherein one of the wearable sensors is a smartphone.

In an embodiment, one of the wearable sensors are arranged on a band, preferably placed on a portion of the upper arm, forearm, hand, wrist, chest, or combinations thereof.

It is also disclosed a data processing apparatus comprising means for carrying out the steps of the any of the disclosed methods.

It is further disclosed a device for estimating an agricultural crop status from a wearable sensor worn by an agricultural worker, comprising a data processing apparatus comprising means for carrying out the steps of: collecting sensor data points from the wearable sensor worn by the agricultural worker when working on the agricultural crop, wherein each sensor data point is georeferenced; estimating an agricultural crop status for each sensor data point, using a pre-trained model which correlates sensor data with agricultural crop status; generating a 2D representation from the estimated agricultural crop status.

## BRIEF DESCRIPTION OF THE DRAWINGS

The following figures provide preferred embodiments for illustrating the disclosure and should not be seen as limiting the scope of invention.

**Figure 1:** Schematic representation of an embodiment of a system for monitoring agricultural workers comprising wearable devices, a mobile device comprising an application and a remote server.

**Figure 2:** Schematic representation of an embodiment of a map of olive trees and a respective visual clue in line with the time that a worker spent in each tree.

**Figure 3:** Schematic representation of an embodiment of an agricultural crop map with a representation of a worker's speed.

**Figure 4:** Graphical representation of an embodiment for detecting and counting a worker's inclination.

**Figure 5:** Graphical representation of an embodiment for detecting and counting a cut using a force signal and snap signal.

**Figure 6:** Schematic representation of an embodiment for checking if a given line segment is a candidate for the final graph.

**Figure 7:** Graphical representation of an embodiment of each step for generating a Directed Acyclic Graph.

**Figure 8:** Graphical representation of GPS measurements collected (smaller points) along the path (line) the worker took.

**Figure 9:** Graphical representation of GPS measurements collected (smaller points) of a worker's path in an olive culture.

**Figure 10:** Heatmap graphical representation of the predicted states on each observation versus a ground truth.

**Figure 11:** Graphical representation of a comparison between our ground truth data and the estimated sequence.

**Figure 12:** Schematic representation of an embodiment of a method for correlating worker sensor data with an agriculture crop state.

**Figure 13:** Schematic representation of a worker position gathered data on an olive culture.

**Figure 14:** Schematic representation of a worker position gathered data on a vine culture.

**Figure 15:** Schematic representation of an embodiment of the path estimation G for the considered sampling periods in the olive culture.

**Figure 16:** Graphical representation of the results obtained for the olive culture on the considered sample periods.

**Figure 17:** Graphical representation of the decoded sequences obtained using DB method.

**Figure 18:** Schematic representation of an embodiment of the path estimation G for the considered sampling periods in the vine culture.

**Figure 19:** Graphical representation of the results obtained for the vine culture on the considered sample periods.

**Figure 20:** Graphical representation of the decoded sequences obtained using HMM method.

## DETAILED DESCRIPTION

The present document discloses a method for correlating worker sensor data with an agriculture crop state, e.g., for assessing the condition of a vineyard.

In particular, in viniculture metrics such as trunk inclinations and shear cuts were quantified as they are very common in this agricultural production. The developed algorithms showed an error of 1.36° for the calculus of inclination and 2.43 cuts for the prediction of cuts when tested with on-field data. These results suggest that the developed method and system is reliable to be used in agricultural sites and give credible feedback on their workers, e.g., farmers, and on the agriculture crop state.

For example, the number of cuts provide information about the growth of the vine as well as the density of branches of the vine. As this data is geolocated, it is possible to know in that section of the vineyard, the plant has more or less density.

This can be applied to the pruning case as well as to the picking case where it is sections of the crop that have had more or less fruit - the higher the number of cuts in the harvest, the greater the amount of fruit in that area of the crop. In particular for grapes, kiwi, passion fruit, among others.

The method allows for near real-time monitoring implementation in a smartphone application and can be calculated during different agriculture activities, such as pruning, harvesting and shoot thinning.

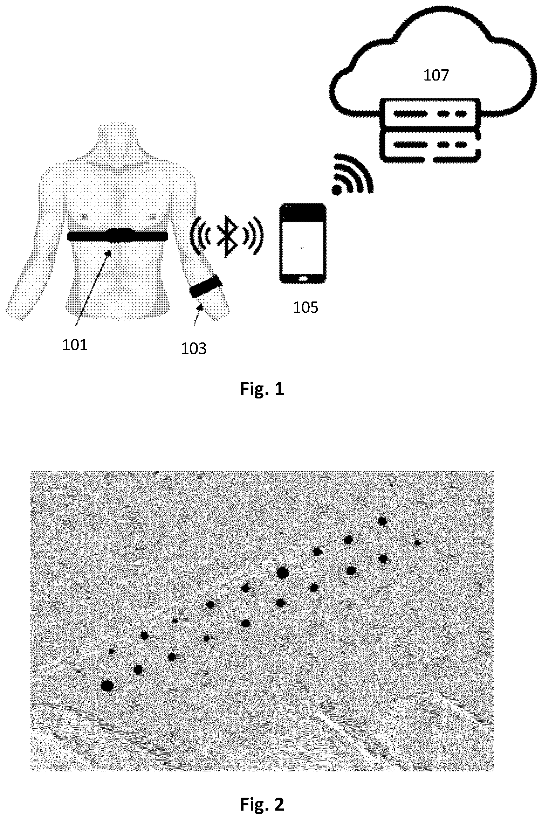

**Figure 1** shows a schematic representation of an embodiment of a system for monitoring agricultural workers comprising wearable devices, a mobile application, and a remote server, wherein 101 represents a chest wearable device, 103 represents an arm-band wearable device, 105 represents a mobile phone comprising a mobile application, and 107 represents a remote server. It also discloses a connection between the wearable sensors and the mobile phone, e.g., via a Bluetooth connection, and also between the app and the remote server, e.g., a cellular connection, 4G, 5G, Wi-Fi, where the extracted indicators are stored for real-time/near real-time monitoring.

In an embodiment, the system comprises two different wearable devices and a mobile phone with a mobile application, e.g., an integrative Android mobile application.

In an embodiment, the system further comprises a satellite geopositioning system such as GPS for geotracking a worker on the crop.

In an embodiment, a first wearable device is a wearable patch device that comprises a single-lead electrocardiogram, a respiration sensor, an accelerometer, a gyroscope, a skin thermometer or a combination of any of these. These sensors allow for an inference of the body position and/or the worker effort.

In an embodiment, a second wearable device is a hand--band, or arm-band, that incorporates an inertial measurement unit (IMU) with 3-axis accelerometer, gyroscope and magnetometer, along with two conductive textile-based analog force sensors [13].

It is the combination of these two kinds of sensors that allow a multimodal data analysis.

In an embodiment, the accelerometer samples data at a frequency of 10 Hz, and/or the second wearable device have a higher sampling frequency of 50 Hz, which are consistent with the type of indicator that it is aimed to extract form each device.

In an embodiment, the raw data is collected in offline mode to be later processed.

In another embodiment, the raw data is collected in the mobile application for near real-time calculation.

**Figure 2** shows a schematic representation of an embodiment of a map of olive trees and a respective visual clue in line with the time that a worker spent in each tree.

In embodiment, for tree crops and not in line (as in vineyards or similar), through location tracking it is possible to know the time spent on each tree.

In another embodiment, other metrics, for example, the number of pruning cuts or harvesting, it is possible to assess the state of the crop just by monitoring the normal work of the workers always combining the location with metrics like time, cuts, worker movements, etc.

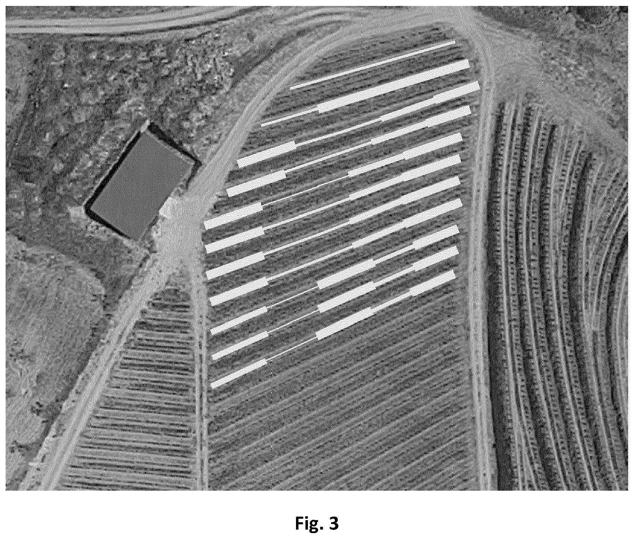

**Figure 3** shows a schematic representation of an embodiment of an agricultural crop map with representation of a worker's speed, wherein the thicker line represents a slower speed. Here it is seen a variation of the worker's speed being slower near the ends than on the vine trees on the middle, thus showing a denser vegetation in that particular area.

In an embodiment, a multimodal visualisation displays different worker's data relating to the crop status, particularly in a heat map.

As an example, two types of data were gathered: a) firstly, simulated data was collected on a laboratory setting and subsequently, b) data was obtained from vineyard real operational field context.

Regarding the creation of simulated data, it was divided in two data collection activities:

1) A cutting simulated dataset: includes repeated cut movement on the same fixed point, alternated movements between the front and back, while maintain a constant height level and alternated movements between a high and low point. Furthermore, these movements were performed using both a shear scissor and hand movements mimicking a cut, aiming to develop an algorithm capable of distinguishing accurately real cuts from similar movements.

2) Frontal trunk inclination simulation: a simulation equipment for angles digital measuring (Bosch PAM 220) was used to validate accurately the inclination algorithm. A chest wearable device (101) was placed on a simulation equipment and data was recorded from 0 degrees (°) to 70° in 10° increments, in order to ensure the correct detection of 30° with a large confidence interval.

For the data collected during vine pruning activities, two male workers were equipped with the wearable devices that recorded their work continuously without any external interference. Each worker was filmed while making 50 cuts, counted by researchers on site. This process was repeated three times for each worker. Filming was used for post-hoc analysis to verify in a synchronized way (signals VS image) the number and of cuts and check for inclinations.

With the data collected on field, two datasets were constructed. A first, comprises shear cut data, including 3-axis acceleration and force data from an arm-band wearable device (103), recorded during the six moments with 50 cuts. The second dataset corresponds to the same intervals, but includes acceleration data from the chest wearable device (101) instead, specifically capturing inclination.

As a way of calibration, it is of utmost importance to analyze the ergonomic posture of workers to detect if their inclination is too prominent, as well as if the number of inclinations is higher than the expected.

In an embodiment, the worker's trunk inclination to the front is equivalent to the angle of the chest wearable device (101) accelerometer's z-axis with the gravitational acceleration and is calculated accordingly to Equation 1, where x, y and z are the accelerations on x, y and z axes, respectively.

$$\text{Inclination} = \arctan\left(\frac{z}{\sqrt{x^2+y^2}}\right) (1)$$

In an embodiment, the frontal inclination angle has a negative value however, the absolute value of this angle is indicative of the actual inclination angle. When standing upright with a straight back, the inclination angle is expected to be 0°. Any frontal inclination corresponds to an increase in the inclination angle away from an upright position.

In an embodiment, the first wearable device is placed on the worker's chest and its stand inclination position can vary depending on the anatomy of the worker. For this reason, the mean inclination for first 5 seconds is calculated and considered as the reference 0° for the following calculations. This allows to calibrate the device to each user automatically. In the mobile application, this reference is calculated on the first 5 seconds after the data start to be acquired - moment during which the user must be in a stand position.

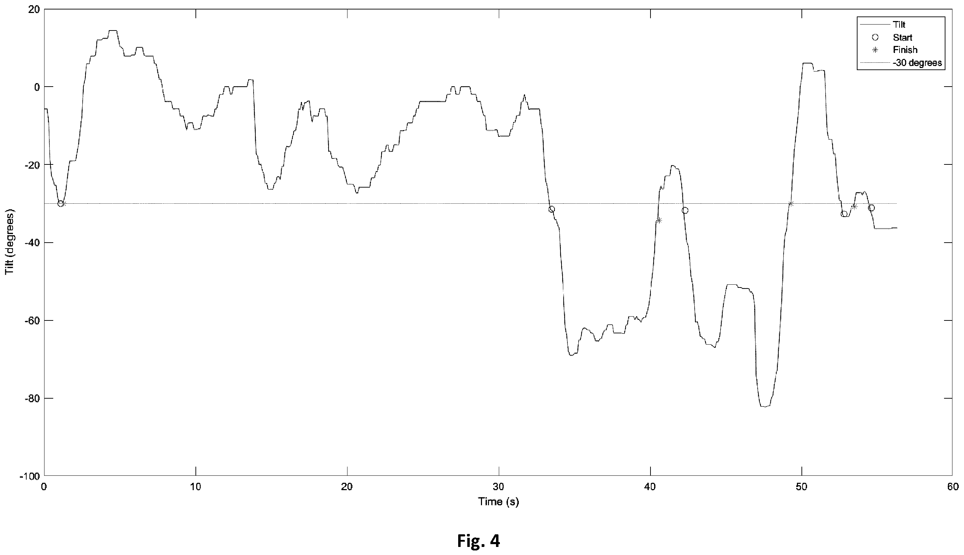

**Figure 4** shows a graphical representation of an embodiment for detecting and counting a worker's inclination.

In an embodiment, the periods that are under-30° are segmented and the ones with more than 1 second are considered valid and summed to the inclination counting.

In order to evaluate the precision on the transformation from acceleration to inclination, the inclination was validated with simulated data (Bosch PAM 220), including the initial calibration step. From the testing it was concluded that the inclination is determined with an overall root mean square error of 1.36° for the dataset values between 0° and 70°.

The existing European guidelines and directives do not indicate a clear limit for workers frontal trunk inclination (in agriculture or other industries) [14], therefore it was considered, as an example, a limit of 30° to consider an inclination as countable and possibly armful for long periods - this value can be easily changed with further research with an occupational health specialist.

Based on these assumptions two indicators were extracted: 1) number of inclinations under 30° with more than 1 second (surpassing possible glitches or interferences in the signal); and 2) the duration which the worker is under 30° of inclination. Both these features are calculated for each 60 seconds of input signal, as it is represented in Figure 4. As shown in this figure, as a way of example, an inclination is calculated in a during 60 seconds windows. In this case, the time and status (inclination on going) are considered in the following window analysis and is calculated the number and duration of inclinations higher 30°.

In an embodiment, a pre-processing median filter was implemented to the acceleration three axes raw data before inclination calculation to remove possible noise and fast-movements (high frequency) artifacts. Different window sizes were tested for the median moving filter, from 3 to 8 samples. The filter with 6 samples was chosen for its good result in attenuating noise but not interfering too much in the signal amplitude and desired waveform features.

In an embodiment, during a cutting motion, there is the contraction and increase in muscle volume in the forearm where the band is placed. This muscle's volume variation could be measured with a mechanomyography (MMG) sensor, whose functioning principle is to detect the mechanical vibrations/movement resulting of muscle activation [15]. Arm-band wearable device (103) force sensors were designed to measure external forces, nevertheless they can also measure on-body forces, in a similar way as MMG sensors: the muscle volume variation leads to an increase in tension in the band and, consequently, to a greater force perceived by the force sensors. To better capture the total exerted tension, the total force was considered as the sum of the forces measured on both sensors.

In an embodiment, the signal from the arm-band wearable device (103) is analysed in 60 seconds intervals to reduce the amount of data processed. This is particularly relevant when implemented in mobile phones or on low-processing power electronic devices.

Moving average filter pre-processing with different size windows (200, 250, 300 samples) was tested with the aim to remove the signal's baseline and level the low baseline contractions with the high baseline ones. However, this approach did not improve the correct detection of cuts, since it leveled stronger with weaker contractions and thus, no pre-processing was applied on the force signal.

In an embodiment, a multimodal approach was applied to detect cutting events based on both force and accelerometer sensors from the Arm-band wearable device (103). The method comprises the following steps: a) signal average calculation; b) peaks detection above the signal average, separated by at least 30 samples; c) peaks average calculation; d) remove peaks below peaks average; e) remove peaks based on their prominence - peaks height must be at least half the difference between the mean of the force signal and the mean of the peaks. This processing workflow was implemented to discard random lower intensity movements that are reflected in the force signal and also to avoid the detection of more than one peak in case of longer cutting events.

Although the peaks detected in the force signal correspond to the most prominent contractions, several movements such as pulling or rotating the arm might have similar shapes - this is where the multimodal approach supports on the rejection of false positive peaks detected on the force signal.

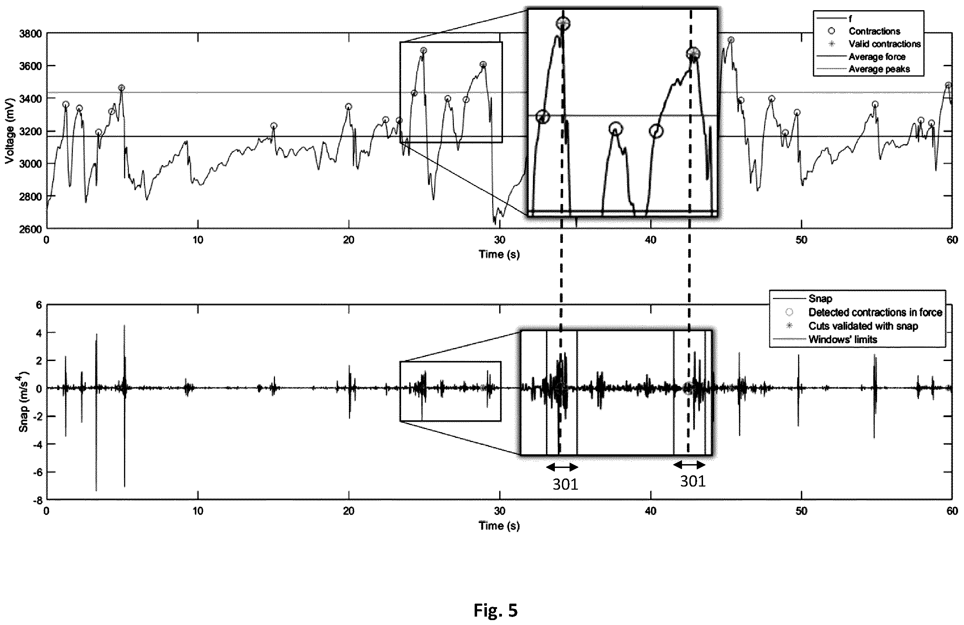

**Figure 5** shows a graphical representation of an embodiment for detecting and counting a cut using a force signal (above) and snap signal (below). Along with the force signal are represented the peaks detected above the average force threshold and the validated contractions above the average peaks threshold, which turns the models adaptable and not based on absolute values. Wherein 301 represent the interval considered for the cut validation on the snap data.

In an embodiment, the pruning shear cut requires a high momentary force application that results in a fast movement with a sudden stop. This leads to a very rapid and significant variation in the accelerometer signal which is used to validate if the muscle contraction was due to a shear cut. For the same 60 seconds interval, the snap is determined from the y and z axes of the arm-band wearable device (103) accelerometer and the cuts validation is performed in the following way: a) a window of 50 samples (equivalent to 1 second) of the snap is centred in the corresponding timestamp of each peak validated by the force sensor; b) on each window, the maximum and minimum values of the snap signal are determined, and the amplitude between these values is calculated; c) if this amplitude is greater than twice the standard deviation of the full interval of the snap signal, the force peak is considered a valid cut.

Concerning the multimodal algorithm performance on the simulated signals with scissors, it detected 20 out of 26 cuts, which shows an accuracy of 77%. Regarding the performance on the data collected on operational field in a vineyard (signals of 50 cuts), the results are presented in Table 1.

Table I. Number of detected cuts for 3 signals of 2 workers.

| Number of cuts | Worker 1 | Worker 2 |
|---|---|---|
| Signal 1 | 36 | 49 |
| Signal 2 | 48 | 51 |
| Signal 3 | 49 | 53 |

Remembering that these signals have a ground truth of 50 cuts verified on video, the algorithm determines the number of cuts with an associated root mean square error of 2.5 cuts. For the signal 1 of worker 1, the number of counted cuts is significantly smaller. As observed on the field and confirmed on the video, this could be explained by the fact that worker was cutting very small branches repeatedly, which lead to many cuts to be considered as a single one. Additionally, the small size of the branches creates a small amount of force and a very low snap peak, not meeting the criteria to be classified as a cut. Thus, the cutting threshold can advantageously be adjusted individually per user.

It is further disclosed a map-matching method using Hidden-Markov Models (HMM) to find the most probable sequence of line segments (states) the worker has been working on.

In an embodiment, the map-matching method comprises a pre-processing step applied to the dataset. For a given worker, the dataset $D$ is defined as $D = \{\langle t, z_t \rangle\}^T_{t=1}$, where $t$ denotes a timestamp of format DD-MM-YY hh:mm:ss, and $z_t$ the respective pair of longitude and latitude $z_t = (lat_t, lon_t)$ measured by a GPS device, in Decimal Degrees (DD), at time $t$. The data is collected during the working time of a given worker, for example, with a sample rate of 1Hz.

Given this high sample rate, and the natural noise the GPS device adds to the actual position of the worker, a simple moving average with a window of size $\tau$ is performed and then the Haversine distance, $d(z_t, z_{t+1})$, is determined between consecutive points in time of a worker's position. If the position between these consecutive points is lower than a pre-defined threshold $\delta_z$, the latter is discarded from the dataset. The Haversine distance between two measurements in a sphere is given by

$$d(z_t, z_{t+1}) = 2R \arcsin \left( \sqrt{\sin^2 \left( \frac{lat_{t+1} - lat_t}{2} \right) + \cos lat_t \cos lat_{t+1} \sin^2 \left( \frac{lon_{t+1} - lon_t}{2} \right)} \right) \quad , \quad (1)$$

where $R \sim 6370 \times 10^3$ m is the radius of the Earth. Note the International System of Units (SI) is used since these are relatively low displacements between consecutive measurements.

In an embodiment, two methods were developed for olive and vine culture. The methods comprise a step of receiving georeferencing coordinates with geographical distribution agricultural georeferencing coordinates with a geographical distribution of the agricultural crop.

In an embodiment, for the vine culture the method is based on the measured GPS positions and the metallic structures.

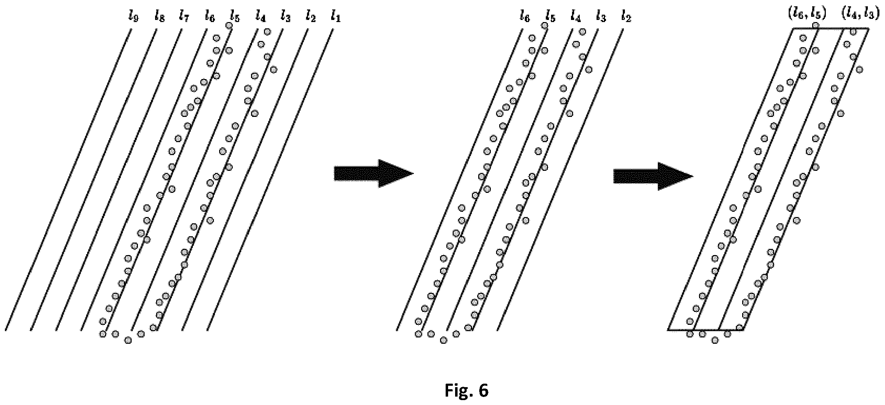

**Figure 6** shows the schematic representation of an embodiment for checking if a given line segment is a candidate for the final graph.

It is assumed that there are at least two workers in the vineyard, working on consequent metallic structures, i.e., for a given line segment $l_i$, it is not expected the same worker to perform any activity in the segment $l_{i+1}$. Our path-finding algorithm starts by spanning the whole vineyard iteratively and, for each pair of metallic structures, if there is a point in between, those lines were taken into consideration (middle plot of Fig. 6). Then, on denoting by $N_l$ the total number of line segments, this process is repeated. However, instead of considering only one point, the estimate:

$$n_p = \frac{T}{N_l}$$

is applied to identify the possible metallic structure pairs.

In an embodiment, in the end, a line is drawn between each consecutive endpoint of the obtained metallic structures such that our geometry is an undirected acyclic graph (right plot of Fig. 6).

Given this possible list of segment candidates, note that there can still be consequent segments.

Given the final candidates, the line segments based on GPS measurements are re-joined and re-oriented, making it a DAG again. These steps described above are represented in Figure 6.

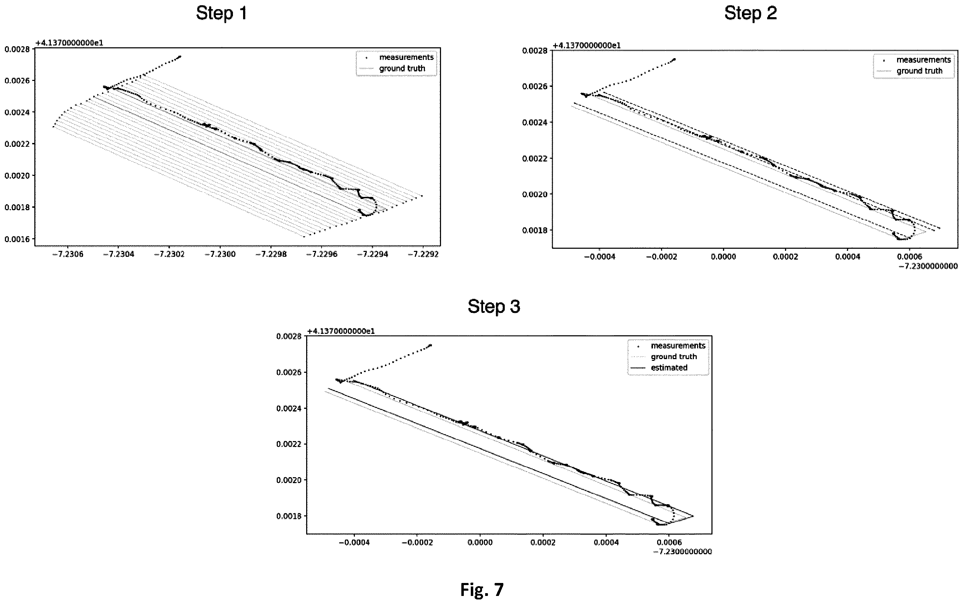

**Figure 7** shows a graphical representation of an embodiment of each step for generating a Directed Acyclic Graph.

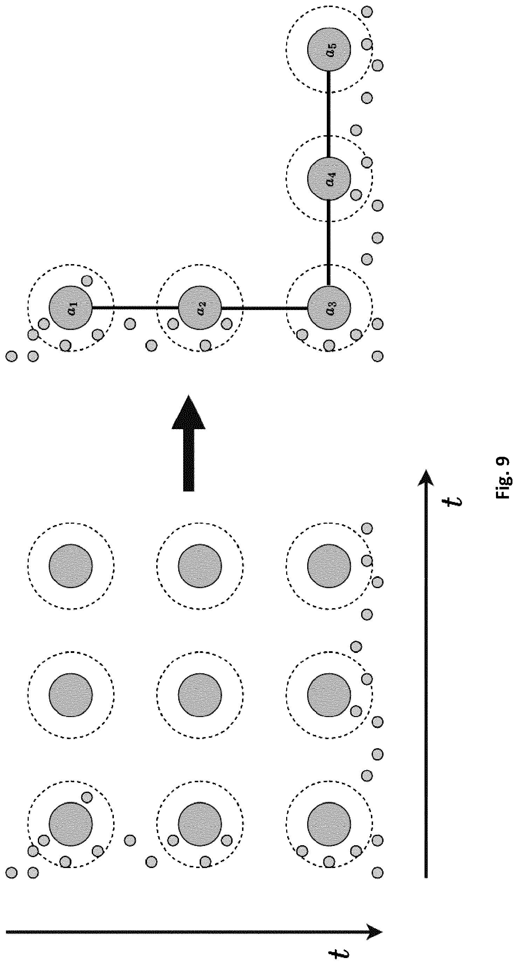

For the olive culture, the method considers a search radius around every tree and estimates the path based on the median time of the points around each tree. It starts by determining the points which are enclosed within a predetermined search radius. In an embodiment, for the trees which have points around them, the median time of the respective observations is determined. Then, given the median times found for each tree, and sorted by increasing order in time. The rationale behind this method is depicted in Fig. 9, where on the left side there is the initial set of trees and the registered GPS measurements along the olive grove, and on the right side the estimated set of trees from where the worker performed an activity.

In an embodiment, the map-matching method based on HMM is performed after the pre-processing described previously and the trees or metallic-structures a worker was on.

The first Map-matching method is based on distances. Given the estimated structure found by the methods proposed previously, for each GPS measurement, the distance is determined to each element of the DAG. For the olive culture, if an element of the DAG is a transition between two trees, the distance between $z_k$ and $o_{i,k}$ is penalized by R. The reasoning behind this penalization is that, as a worker is performing an activity around a given tree, there might be some measurements that have a projection on top of a transition.

The second Map-matching method is based on Hidden Markov Models (HMM). Let $\mathbf{z} = [z_t]_{t=0}^T$ denote the sequence of observations (GPS measurements) and $\mathbf{s} = [s_{i,t}]_{t=0}^T$ the correspondent unknown sequence of hidden states, where $i = \{0, \dots, N\}$ denotes the number of possible states a given observation $z_t$ might match. One objective is to find the most probable sequence of states s by matching each observation with a correspondent state at time $t$ using as an underlying model an HMM. Below, the definition of a given state $s_i$ is given.

In an embodiment, having the information on the path a given worker spanned along its working hours, as described previously, that path is defined as the *DAG* = (*V, E*) with |*V*| vertices and |*E*| = |*V*| - 1 edges. On denoting by $\mathbf{v} = [v]_{k=0}^{|V|-1}$ the vertices of such graph, where $v_k = (lat_k, lon_k)$, an edge is characterized by $e_k = (v_k, v_{k+1})$. Such edges are the states of an HMM.

An HMM can be fully characterized by the triplet of probabilities $\lambda = (\Pi, A, B)$ where $\Pi$ denotes the vector of initial probabilities, $\mathbf{A} = [a_{i,t}] \in \mathbb{R}^{N \times T}$ is the emission probability matrix, and $\mathbf{B} = [b_{i,j}] \in \mathbb{R}^{N \times N}$ is the transition probability matrix.

In an embodiment, a given element of the emission matrix $a_{i,t} = p(z_t|s_i)$ is defined as the conditional probability of an observation $z_t$ being emitted by the state $s_i$, while $b_{i,j}^{(t,t-1)} = p(s_i^{(t)}|s_j^{(t-1)})$ is defined as the conditional probability of being in the state $s_i$ at time $t$, given that it was transitioned from the state $s_j$ at time $t$ - 1. Note that in reality, the elements of the transition matrix are time-independent.

In an embodiment, GPS noise can be modelled as a zero-mean Gaussian distribution. The GPS noise of a given measurement $z_t$ is defined as the Haversine distance $d(z_t, x_i, t)$ between the measurement and its projection onto a given state $s_i$, $x_i$, $t$. For a given measurement $z_t$, the emission probabilities are estimated according to

$$p(z_t|s_i) = \frac{1}{2\pi\sigma_z} e^{-\frac{1}{2}\left(\frac{d(z_t, x_{i,t})}{\sigma_z}\right)^2} \qquad (5)$$

where $\sigma_z$ is the standard deviation of the GPS noise, determined as

$$\sigma_z = 1.4826 \operatorname*{median}_t d(z_t, x_{i^*,t}) \qquad (6)$$

Here $i^*$ denotes the best candidate projection of the observation $z_t$. Since the actual state in which a given measurement is observed is not known, the best candidate state for a given measurement is determined as the one closest to a given state, i.e.,

$$i^* = \arg\min_i d(z_t, x_{i,t}) \qquad (7)$$

In an embodiment, ($m_{lati}$, $m_{loni}$)the transition probabilities are determined as

$$p(s_i^{(t)}|s_j^{(t-1)}) = \frac{1}{\beta} e^{-\frac{\Delta_{i,j}}{\beta}}, \quad \beta = \frac{1}{\ln 2} \operatorname*{median}_{i,j} \Delta_{i,j}, \qquad (9)$$

where $\beta$ is the exponential distribution parameter determined directly from the data for each ($z_k$, $z_{k+1}$) pair and

$$\Delta_{i,j} = \left| d(z_{k-1}, z_k) - d(o_{k-1,i}, o_{k,j}) \right|$$

In an embodiment, a threshold is defined depending on the agricultural culture for stop searching for unreasonable transitions.

In an embodiment, the initial probabilities are assigned as

$$\pi_i = p(z_0 | s_i) \tag{12}$$

i.e., the probability of the first observation being emitted from a given state $s_i$.

In an embodiment, given the defined model parameters $\lambda$, the sequence of most probable states s corresponding to the hidden observations $z$ are decoded using the Viterbi algorithm.

Given the methods described above, experiments were made in a vineyard culture. To assess the effectiveness of the method, the data was collected in a semi-controlled environment. During the labour time of a given worker, the timestamps and the correspondent latitude and longitude pairs that delimits a given state were registered. These records serve as the ground truth data. Since a state definition depends on a given agricultural culture, a full description of how to obtain such states are described below.

For the first considered culture, grape harvest, a given bard is separated by several metallic pole vineyards. Each of these metallic poles serves as vertices of our graph G and thus a given state is defined in-between consecutive poles. In the visited culture, each pole is separated by 6 meters long and the total bard length is 120 meters. In the absence of ground truth data, note that it is possible to extract the number of poles in a given bard by measuring the bard length and extracting equally spaced latitude and longitude pairs, assuming an evenly spaced length between poles.

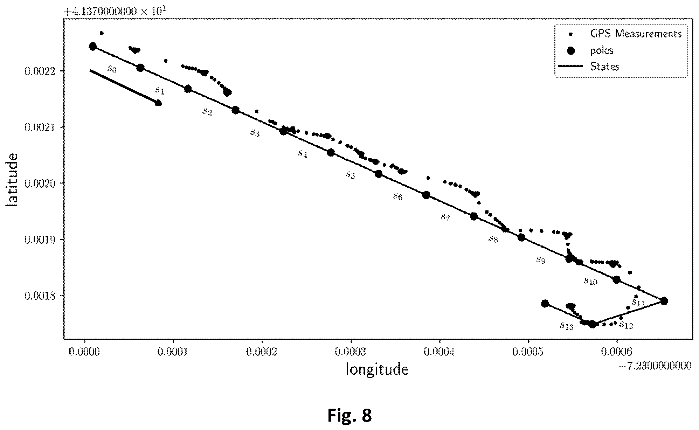

The worker started to work near the middle of the bard. Data was collected and preprocessed as previously disclosed. In total, 1438 GPS measurements were collected for a total of 45 minutes. The bard along the worker worked and the collected GPS measurements are depicted in Figure 8. As is shown, the collected GPS measurements do not reflect the actual position of the worker.

**Figure 8** shows a graphical representation of GPS measurements collected (smaller points) along the path (line) the worker took, for example, while collecting grapes. The black arrow points towards his/her movement direction.

**Figure 9** shows a graphical representation of GPS measurements collected (smaller points) of a worker's path in an olive culture.

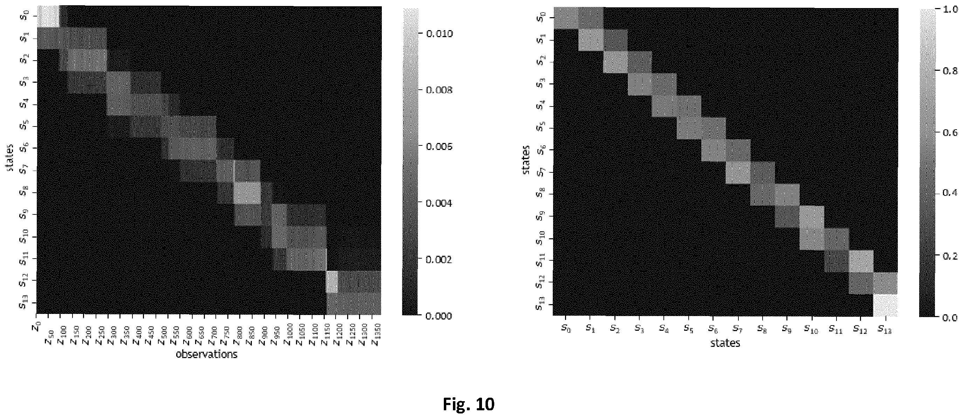

**Figure 10** shows a heatmap graphical representation of the predicted states on each observation versus a ground truth.

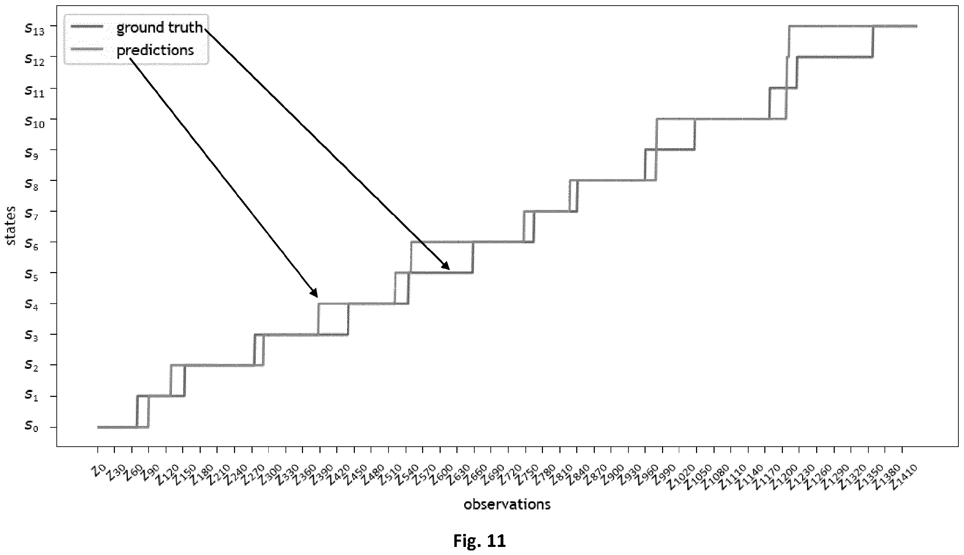

**Figure 11** shows a graphical representation of a comparison between our ground truth data and the estimated sequence.

The emission probabilities $p(z_t | s_i)$ are calculated according to Eq. (5) a zero probability to every observation which is deviated from at least 18 meters from its projection onto a given state $s_i$, which is about 3 times the length of a given state. Regarding the transition probabilities $p(s_i^{(t)} | s_j^{(t-1)})$ (cf. Eq. (9)), the same condition is applied. These probabilities are represented in the heatmaps depicted in Figure 9. As it is shown, as a given measurement deviates from its nearest states, the emission probabilities drop to zero, as expected.

In an embodiment, given the model parameters, the Viterbi algorithm is used to decode the most probable sequence of states.

In an embodiment, the path estimation using Map-matching methods is applied in two agricultural contexts - olive groves and vineyards.

As a proof of concept, an olive grove and a vineyard located in the region of Mirandela, Portugal is examined. The collected dataset is constructed by reasonably mimicking the path a given worker spanned along a given culture. This is accomplished by simulating a controlled path over the field, which is then used as ground truth to assess the quality of the considered Map-matching models.

In the case of olive culture, two GPS measurements for each tree and one measurement for each transition between trees are collected, while for the vine culture, twenty GPS measurements for each metallic structure and three measurements for each transition between are collected. Based on this data, new samples are generated by adding Gaussian noise to the measurements. It's worth noting that these samples were generated taking into account that the time spent at a tree / metallic structure is longer than the time spent in a transition.

The quality of our methods is assessed in a multi-classification setting. In an embodiment, the evaluation metrics taken into consideration are accuracy (Acc) and the macro average precision and recall (MAP, MAR). The last two are evaluated separately depending on the type of state one faces (if it is a tree/metallic structure or a transition). The reason behind this separation is that ultimately, one is interested in the results obtained when a worker is locally performing an activity.

In an embodiment, map-matching methods are applied in an offline fashion, for example when using a remote server and/or to join a bigger number of location points from the worker to generate his/her path.

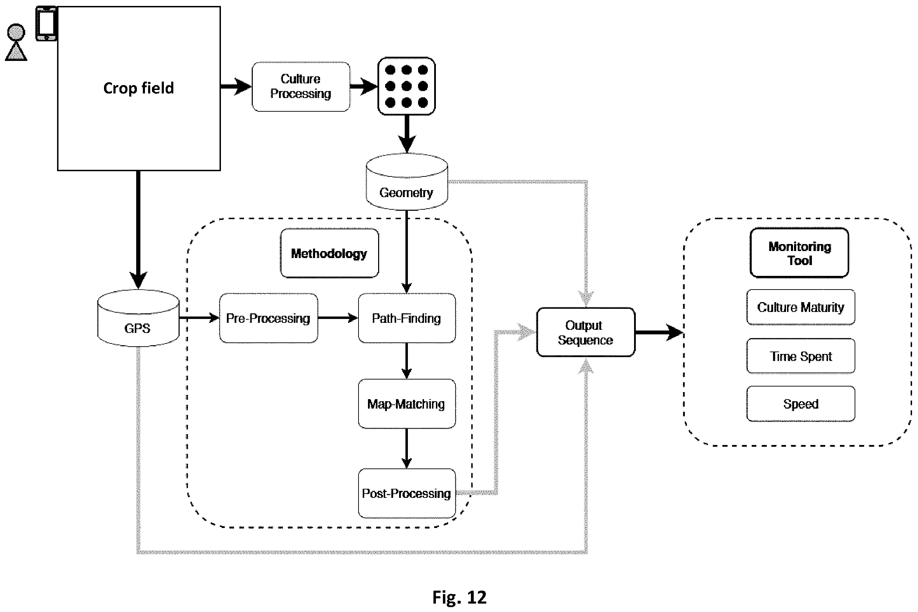

**Figure 12** shows a schematic representation of an embodiment of a method for correlating worker sensor data with an agriculture crop state.

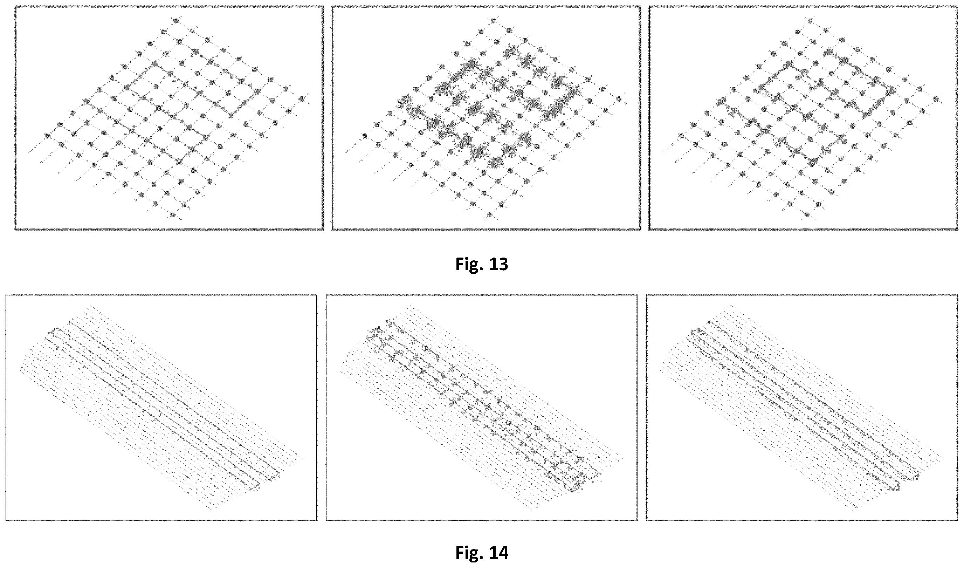

**Figure 13** shows a schematic representation of a worker position gathered data on an olive culture. Wherein on the left it is represented the collected GPS measurements from Google Earth; on the middle the GPS measurements after adding samples with Gaussian noise; and on the right the GPS measurements obtained after sampling and processing. The solid line denotes the ground truth path a worker spanned along his/her task. The dots represent the geometry S.

**Figure 14** shows a schematic representation of a worker position gathered data on a vine culture. Wherein on the left it is represented the collected GPS measurements from Google Earth; on the middle the GPS measurements after adding samples with Gaussian noise; and on the right the GPS measurements obtained after sampling and processing. The solid line denotes the ground truth path a worker spanned along his/her task.

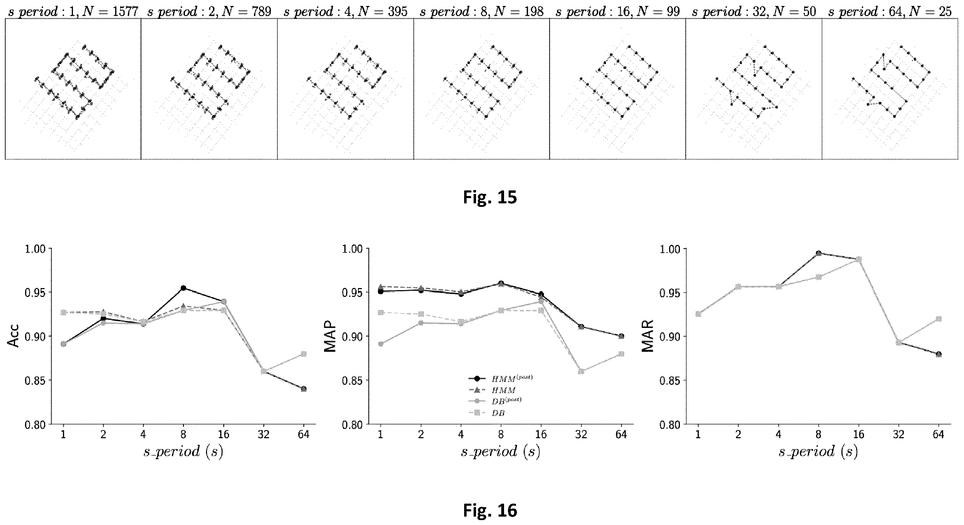

**Figure 15** shows a schematic representation of an embodiment of the path estimation G for the considered sampling periods in the olive culture.

**Figure 16** shows the results obtained for the olive culture on the considered sample periods.

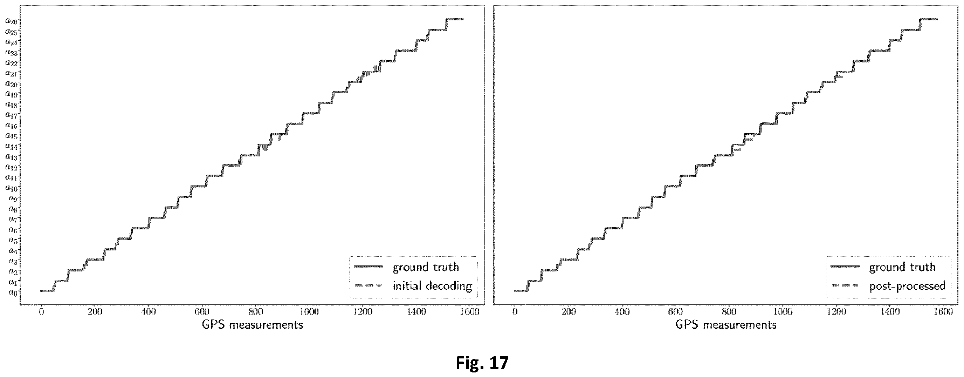

**Figure 17** shows a graphical representation of the decoded sequences obtained using DB method. Wherein on the left it is represented the estimated sequence; and on the right, after applying the post-processing method. Transitions between $(a_i, a_{i+1})$ were omitted in the axis for clarity.

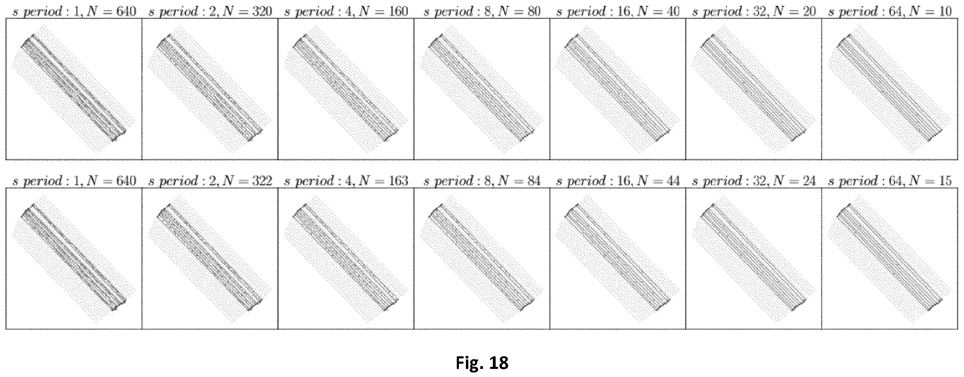

**Figure 18** shows a schematic representation of an embodiment of the path estimation G for the considered sampling periods in the vine culture.

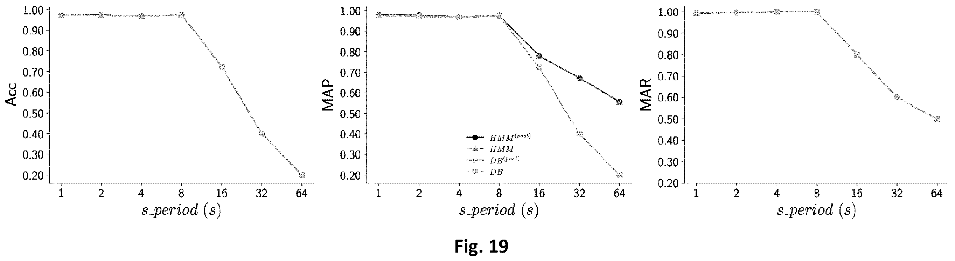

**Figure 19** shows a graphical representation of the results obtained for the vine culture on the considered sample periods.

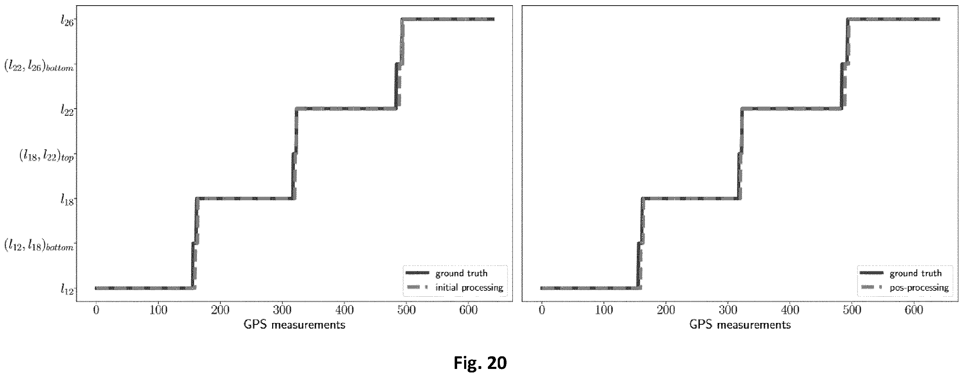

**Figure 20** shows a graphical representation of the decoded sequences obtained using HMM method. Wherein on the left it is represented an estimated sequence; and on the right, after applying the post-processing method.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable. The following claims further set out particular embodiments of the disclosure.

References

[1] S. Pinzke e L. Lavesson, "Ergonomic conditions in manual harvesting in Swedish outdoor cultivation," 2018.

[2] L. Benos, D. Tsaopoulos e D. Bochtis, "A Review on Ergonomics in Agriculture. Part I: Manual Operations".

[3] A. Widyanti, "Ergonomic Checkpoint in Agriculture, Postural Analysis, and Prevalence of Work Musculoskeletal Symptoms among Indonesian Farmers: Road to Safety and Health in Agriculture," 2018.

[4] Y. Du, L. Baccaglini, A. Johnson, J. Puvvula, &. Risto, H. Rautiainen e R. H. Rautiainen, "Factors Associated with Musculoskeletal Discomfort in Farmers and Ranchers in the U.S. Central States," 2022.

[5] Z. Momeni, A. Choobineh, M. Razeghi, H. Ghaem, F. Azadian e H. Daneshmandi, "Work-related Musculoskeletal Symptoms among Agricultural Workers: A Cross-sectional Study in Iran," 2020.

[6] R. Abbasi, P. Martinez e R. Ahmad, "The digitization of agricultural industry - a systematic literature review on agriculture 4.0," Elsevier BV, 2022.

[7] V. Martos, A. Ahmad, P. Cartujo e J. Ordoñez, "Ensuring Agricultural Sustainability through Remote Sensing in the Era of Agriculture 5.0," Multidisciplinary Digital Publishing Institute, 2021.

[8] V. Saiz-Rubio e F. Rovira-Más, "agronomy Review From Smart Farming towards Agriculture 5.0: A Review on Crop Data Management".

[9] D. C. Rose, R. Wheeler, M. Winter, M. Lobley e C. A. Chivers, "Agriculture 4.0: Making it work for people, production, and the planet," Elsevier Ltd, 2021.

[10] V. Patel, A. Chesmore, C. M. Legner e S. Pandey, "Trends in Workplace Wearable Technologies and Connected-Worker Solutions for Next-Generation Occupational Safety, Health, and Productivity," Wiley, 2022.

[11] T. Fukatsu e T. Nanseki, "Monitoring System for Farming Operations with Wearable Devices Utilized Sensor Networks," Molecular Diversity Preservation International, 2009.

[12] C. Bernard, L. Courouve, S. Bouée, A. adjémian, J.-C. Chrétien e I. niedhammer, "Biomechanical and Psychosocial Work Exposures and Musculoskeletal Symptoms among Vineyard Workers," 2011.

[13] A. Oliveira, D. Dias, E. M. Lopes, M. D. C. Vilas-Boas e J. P. S. Cunha, "Snapki-an inertial easy-to-adapt wearable textile device for movement quantification of neurological patients," MDPI AG, 2020.

[14] "Legislation | Safety and health at work EU-OSHA," [Online]. Available: https://osha.europa.eu/en/legislation/ guidelines/provisions_workload. [Acedido em February 2023].

[15] D. Esposito, E. Andreozzi, A. Fratini, G. D. Gargiulo, S. Savino, V. Niola e P. Bifulco, "A Piezoresistive Sensorto Measure Muscle Contraction and Mechanomyography," Multidisciplinary Digital Publishing Institute, 2018.

[16] C. Y. Goh, J. Dauwels, N. Mitrovic, M. T. Asif, A. Oran, P. Jaillet, Online map-matching based on hidden markov model for real-time traffic sensing applications, 2012 15th International IEEE Conference on Intelligent Transportation Systems (2012) 776-781.

[17] T. Miwa, X. Fu, J. Zhang, Y. Zhang, An online map matching algorithm based on second-order hidden markov model, Journal of Advanced Transportation 2021 (2021) 9993860. doi:10.1155/2021/9993860.

[18] Y. Yin, R. R. Shah, G. Wang, R. Zimmermann, Feature-based map matching for low-sampling-rate gps trajectories, ACM Trans. Spatial Algorithms Syst. 4 (2) (aug 2018). doi:10.1145/3223049.

[19] P. Newson, J. Krumm, Hidden markov map matching through noise and sparseness, in: Proceedings of the 17th ACM SIGSPATIAL International Conference on Advances in Geographic Information Systems, GIS '09, Association for Computing Machinery, New York, NY, USA, 2009, p. 336-343. doi:10.1145/1653771.1653818.

[20] Chao, P., Xu, Y., Hua, W. and Zhou, X., 2020. A survey on map-matching algorithms. In Databases Theory and Applications: 31st Australasian Database Conference, ADC 2020, Melbourne, VIC, Australia, February 3-7, 2020, Proceedings 31 (pp. 121-133). Springer International Publishing.

[21] D. Bernstein, A. L. Kornhauser, An introduction to map matching for personal navigation assistants, 1998.

[22] H. Wei, Y. Wang, G. Forman, Y. Zhu, Map matching: Comparison of approaches using sparse and noisy data, in: Proceedings of the 21st ACM SIGSPATIAL International Conference on Advances in Geographic Information Systems, SIGSPATIAL'13, Association for Computing Machinery, New York, NY, USA, 2013, p. 444-447. doi:10.1145/2525314.2525456.

[23] Sharma, G., 2017. Hidden Markov Processes: Theory and Applications to Biology.

[24] T. Hunter, P. Abbeel, A. Bayen, The path inference filter: Model based low-latency map matching of probe vehicle data, IEEE Transactions on Intelligent Transportation Systems 15 (2) (2014) 507-529. doi:10.1109/TITS.2013.2282352.

[25] X. Wang, W. Ni, An improved particle filter and its application to an ins/gps integrated navigation system in a serious noisy scenario, Measurement Science and Technology 27 (9) (2016) 095005. doi:10.1088/0957-0233/27/9/095005.

[26] M. Sharath, N. R. Velaga, M. A. Quddus, A dynamic twodimensional (d2d) weight-based map-matching algorithm, Transportation Research Part C: Emerging Technologies 98 (2019) 409-432. doi:https://doi.org/10.1016/j.trc.2018.12.009.

[27] M. Quddus, S. Washington, Shortest path and vehicle trajectory aided map-matching for low frequency gps data, Transportation Research Part C: Emerging Technologies 55 (2015) 328-339, engineering and Applied Sciences Optimization (OPT-i) - Professor Matthew G. Karlaftis Memorial Issue. doi:https://doi.org/10.1016/j.trc.2015.02.017.

[28] Z. Jin, J. Kim, H. Yeo, S. Choi, Transformer-based map matching model with limited ground-truth data using transfer-learning approach (2021). arXiv:2108.00439.

[29] J. Feng, Y. Li, K. Zhao, Z. Xu, T. Xia, J. Zhang, D. Jin, Deepmm: Deep learning based map matching with data augmentation, IEEE Transactions on Mobile Computing 21 (7) (2022) 2372-2384. doi:10.1109/TMC.2020.3043500.

**Claims**

1. A method for estimating an agricultural crop status from a wearable sensor worn by an agricultural worker, comprising the steps:

   collecting sensor data points from the wearable sensor worn by the agricultural worker when working on the agricultural crop, wherein each sensor data point is georeferenced;
   estimating an agricultural crop status for each sensor data point, using a pre-trained model which correlates sensor data with agricultural crop status;
   generating a 2D representation from the estimated agricultural crop status, in particular the agricultural crop status comprising a viticulture metric or an olive culture metric.

2. The method according to the previous claim wherein a sensor data point comprises a trunk inclination value of the agricultural worker, the wearable sensor comprises an accelerometer sensor, and the wearable sensor is a trunk-wearable sensor, a hand-wearable sensor, or an arm-wearable sensor.

3. The method according to any of the previous claims wherein the sensor data points comprise a value of number of shear cuts performed by the agricultural worker, the wearable sensor comprises an accelerometer sensor and a force sensor, and the wearable sensor is a hand-wearable sensor or an arm-wearable sensor, in particular wherein a shear cut is determined as performed if a force detected by the force sensor is above a predetermined threshold and if a variation in acceleration detected by the accelerometer sensor is above a predetermined threshold.

4. The method according to any of the previous claim wherein the sensor data points comprise a value of number of arm movements performed by the agricultural worker, the wearable sensor comprises an accelerometer sensor, and the wearable sensor is a hand-wearable sensor, or an arm-wearable sensor, in particular wherein an arm movement is determined as performed if an angular displacement detected by the accelerometer sensor is above a predetermined threshold and if a variation in direction is detected by the accelerometer sensor above a predetermined threshold.

5. The method according to any of the previous claim wherein each sensor data point collected comprises at least one wearable sensor parameter, in particular comprising: a georeferenced position of the wearable sensor, velocity of the wearable sensor, an inertial position of the wearable sensor, or combinations thereof.

6. The method according to any of the previous claims wherein each sensor data point collected comprises at least one worker manual operation parameter, in particular comprising: frequency of movement, number of movements, movement force, or combinations thereof.

7. The method according to the previous claim wherein each sensor data point collected comprises at least one worker biosignal, in particular comprising: skin temperature, electrocardiogram signal, cardiac rhythm, respiration, or combinations thereof.

8. The method according to any of the previous claims wherein each sensor data point is georeferenced by map matching received georeferencing coordinates by a georeferencing receiver with a geographical distribution of the agricultural crop, in particular wherein:

    the geographical distribution of the agricultural crop comprises a plurality of line segments, and the map matching comprises minimizing a distance between a received georeferencing coordinate and projections from the plurality of line segments, in particular a Fréchet distance, or
    the geographical distribution of the agricultural crop comprises a plurality of points, the map matching comprises minimizing a distance between a received georeferencing coordinate and the plurality of points, in particular a Fréchet distance;
    further in particular wherein the map matching comprises carrying out a Hidden-Markov Model where hidden states are possible locations of the geographical distribution of the agricultural crop.

9. The method according to any of the previous claims wherein the wearable sensor is a tool sensor mounted on an agricultural tool for the agricultural worker to use when working on the agricultural crop, in particular wherein the tool sensor includes at least one of: weight sensor, a moisture sensor, a temperature sensor, a pH sensor, a flow rate sensor, a pressure sensor, a wind speed sensor, a solar radiation sensor, and an orientation sensor; further in particular, the agricultural tool being selected from the group consisting of harvesting baskets, tractors, drones, irrigation systems, planting machines, sprayers, soil probes, weather stations, plows, combine harvesters, fertilizer spreaders, weed control robots, greenhouse climate controllers, seed drills, and livestock monitoring devices.

10. The method according to any of the previous claims wherein the method comprises:

    collecting sensor data points from the wearable sensor worn by the agricultural worker when working on the agricultural crop, wherein each sensor data point is georeferenced; extracting machine-learning features from each sensor data point;
    applying the pretrained-model to the extracted features for estimating an agricultural crop status corresponding to each sensor data point;
    generating a 2D representation of a crop status map from the estimated agricultural crop status.

11. A system for estimating an agricultural crop status comprising a wearable sensor to be worn by an agricultural worker for estimating an agricultural crop status, and comprising a data processor arranged for carrying out the method of any of the previous claims, in particular the wearable sensor being arranged on a band, a band preferably for placement on a portion of the upper arm, forearm, hand, wrist, chest, or combinations thereof.

12. The system according to the previous claim, comprising at least two wearable sensors to be worn by an agricultural worker for estimating an agricultural crop status, in particular wherein one of the wearable sensors is comprised in a smartphone.

13. The system according to the claim 11 or 12 comprising a basket for measuring a quantity of crop placed inside of the basket, comprising: one or more weight sensors; an accelerometer configured to detect the orientation and tilt of the basket; and a processing unit connected to the weight sensors and the accelerometer; wherein the processing unit is configured for: receiving data from the weight sensors and from the accelerometer; and providing a corrected weight by adjusting the weight measurement based on the accelerometer data.

14. The system according to the previous claim wherein the one or more weight sensors are one or more load cells comprised in a base of the basket or in a handle of the basket.

15. The system according to any of the claims 11-14 wherein data processor is arranged to use the accelerometer data used to determine if the basket is in motion and temporarily pause weight measurement while motion is detected.

**Fig. 1**

**Fig. 2**

Fig. 3

Fig. 4

**Fig. 5**

Fig. 6

Fig. 7

**Fig. 8**

EP 4 481 665 A1

Fig. 9

Fig. 10

EP 4 481 665 A1

Fig. 11

EP 4 481 665 A1

Monitoring Tool

Culture Maturity

Time Spent

Speed

Output Sequence

Geometry

Culture Processing

Methodology

Path-Finding

Map-Matching

Post-Processing

Pre-Processing

Crop field

GPS

Fig. 12

**Fig. 13**

**Fig. 14**

s period : 1, N = 1577   s period : 2, N = 789   s period : 4, N = 395   s period : 8, N = 198   s period : 16, N = 99   s period : 32, N = 50   s period : 64, N = 25

**Fig. 15**

**Fig. 16**

Fig. 17

Fig. 18

EP 4 481 665 A1

Fig. 19

30

Fig. 20

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NL 2 029 485 B1 (NOVUM EST B V [NL]; COHESE HOLDING B V [NL]) 16 May 2023 (2023-05-16) * the whole document * | 1-15 | INV. G06Q50/02 H04W4/02 H04W4/029 H04W4/38 A01B79/00 |
| A | WO 2021/033847 A1 (POOMASY INC [KR]; KIM YONGHYUN [KR]) 25 February 2021 (2021-02-25) * paragraph [0010] - paragraph [0020]; figures 1,4,5 * | 1-15 | |
| A | PAUL NEWSON ET AL: "Hidden Markov map matching through noise and sparseness", PROCEEDINGS OF THE 17TH ACM SIGSPATIAL INTERNATIONAL CONFERENCE ON ADVANCES IN GEOGRAPHIC INFORMATION SYSTEMS, GIS '09, ACM PRESS, NEW YORK, NEW YORK, USA, 4 November 2009 (2009-11-04), pages 336-343, XP058360607, DOI: 10.1145/1653771.1653818 ISBN: 978-1-60558-649-6 * the whole document * | 8 | |
| A | US 2020/019777 A1 (GURZONI JR JOSE ANGELO [BR] ET AL) 16 January 2020 (2020-01-16) * paragraph [0007] - paragraph [0100]; figures 9,10 * | 1-15 | TECHNICAL FIELDS SEARCHED (IPC) G06Q G01G G06N H04W A01B |
| A | SG 1020 1502 246P A (SPQ & J PTE LTD [SG]) 28 October 2016 (2016-10-28) * paragraph [0058] - paragraph [0060] * | 1-15 | |

The present search report has been drawn up for all claims

| Place of search | Date of completion of the search | Examiner |
|---|---|---|
| Munich | 3 September 2024 | Lindner, Anja |

EPO FORM 1503 03.82 (P04C01)

## ANNEX TO THE EUROPEAN SEARCH REPORT
## ON EUROPEAN PATENT APPLICATION NO.

EP 24 18 3865

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2024

| Patent document cited in search report | Publication date | Patent family member(s) | | Publication date |
|---|---|---|---|---|
| NL 2029485 B1 | 16-05-2023 | NONE | | |
| WO 2021033847 A1 | 25-02-2021 | KR | 20210022448 A | 03-03-2021 |
| | | WO | 2021033847 A1 | 25-02-2021 |
| US 2020019777 A1 | 16-01-2020 | BR | 112020026356 A2 | 30-03-2021 |
| | | US | 2020019777 A1 | 16-01-2020 |
| | | US | 2021133443 A1 | 06-05-2021 |
| | | WO | 2020012259 A1 | 16-01-2020 |
| SG 10201502246P A | 28-10-2016 | MY | 180728 A | 08-12-2020 |
| | | SG | 10201502246P A | 28-10-2016 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V. PATEL** ; **A. CHESMORE** ; **C. M. LEGNER** ; **S. PANDEY**. Trends in Workplace Wearable Technologies and Connected-Worker Solutions for Next-Generation Occupational Safety, Health, and Productivity. Wiley, 2022
- **T. FUKATSU** ; **T. NANSEKI**. Monitoring System for Farming Operations with Wearable Devices Utilized Sensor Networks. *Molecular Diversity Preservation International*, 2009
- **C. BERNARD** ; **L. COUROUVE** ; **S. BOUÉE** ; **A. ADJÉMIAN** ; **J.-C. CHRÉTIEN** ; **I. NIEDHAMMER**. *Biomechanical and Psychosocial Work Exposures and Musculoskeletal Symptoms among Vineyard Workers*, 2011
- **A. OLIVEIRA** ; **D. DIAS** ; **E. M. LOPES** ; **M. D. C. VILAS-BOAS** ; **J. P. S. CUNHA**. Snapki-an inertial easy-to-adapt wearable textile device for movement quantification of neurological patients. *MDPI AG*, 2020
- *Legislation | Safety and health at work EU-OSHA*, February 2023, https://osha.europa.eu/en/legislation/guidelines/provisions_workload
- **D. ESPOSITO** ; **E. ANDREOZZI** ; **A. FRATINI** ; **G. D. GARGIULO** ; **S. SAVINO** ; **V. NIOLA** ; **P. BIFULCO**. A Piezoresistive Sensorto Measure Muscle Contraction and Mechanomyography. Multidisciplinary Digital Publishing Institute, 2018
- Online map-matching based on hidden markov model for real-time traffic sensing applications. **C. Y. GOH** ; **J. DAUWELS** ; **N. MITROVIC** ; **M. T. ASIF** ; **A. ORAN** ; **P. JAILLET**. 15th International IEEE Conference on Intelligent Transportation Systems (2012). 2012, 776-781
- **T. MIWA** ; **X. FU** ; **J. ZHANG** ; **Y. ZHANG**. An online map matching algorithm based on second-order hidden markov model. *Journal of Advanced Transportation*, 2021, vol. 2021, 9993860
- **Y. YIN** ; **R. R. SHAH** ; **G. WANG** ; **R. ZIMMERMANN**. Feature-based map matching for low-sampling-rate gps trajectories. *ACM Trans. Spatial Algorithms Syst.*, August 2018, vol. 4 (2)
- Hidden markov map matching through noise and sparseness, in: Proceedings of the 17th ACM SIGSPATIAL International Conference on Advances in Geographic Information Systems. **P. NEWSON** ; **J. KRUMM**. GIS '09. Association for Computing Machinery, 2009, 336-343

- A survey on map-matching algorithms.. **CHAO, P.** ; **XU, Y.** ; **HUA, W** ; **ZHOU, X**. Databases Theory and Applications: 31st Australasian Database Conference, ADC 2020, Melbourne, VIC, Australia, February 3-7, 2020, Proceedings 31. Springer International Publishing, 2020, 121-133
- **D. BERNSTEIN** ; **A. L. KORNHAUSER**. An introduction to map matching for personal navigation assistants. 1998
- Map matching: Comparison of approaches using sparse and noisy data. **H. WEI** ; **Y. WANG** ; **G. FORMAN** ; **Y. ZHU**. Proceedings of the 21st ACM SIGSPATIAL International Conference on Advances in Geographic Information Systems, SIGSPATIAL'13. Association for Computing Machinery, 2013, 444-447
- **SHARMA, G.** *Hidden Markov Processes: Theory and Applications to Biology*, 2017
- **T. HUNTER** ; **P. ABBEEL** ; **A. BAYEN**. The path inference filter: Model based low-latency map matching of probe vehicle data. *IEEE Transactions on Intelligent Transportation Systems*, 2014, vol. 15 (2), 507-529
- **X. WANG** ; **W. NI**. An improved particle filter and its application to an ins/gps integrated navigation system in a serious noisy scenario. *Measurement Science and Technology*, vol. 27 (9), 2016
- **M. SHARATH** ; **N. R. VELAGA** ; **M. A. QUDDUS**. A dynamic twodimensional (d2d) weight-based map-matching algorithm. *Transportation Research Part C: Emerging Technologies*, 2019, vol. 98, 409-432
- **M. QUDDUS** ; **S. WASHINGTON**. Shortest path and vehicle trajectory aided map-matching for low frequency gps data. *Transportation Research Part C: Emerging Technologies*, 2015, vol. 55, 328-339
- **Z. JIN** ; **J. KIM** ; **H. YEO** ; **S. CHOI**. Transformer-based map matching model with limited ground-truth data using transfer-learning approach. *arXiv:2108.00439*, 2021
- **J. FENG** ; **Y. LI** ; **K. ZHAO** ; **Z. XU** ; **T. XIA** ; **J. ZHANG** ; **D. JIN**. Deepmm: Deep learning based map matching with data augmentation. *IEEE Transactions on Mobile Computing*, 2022, vol. 21 (7), 2372-2384